# EUROPEAN PATENT APPLICATION

(11) **EP 4 270 871 A1**
(43) Date of publication of application: **01.11.2023**
(21) Application number: 23168821.9
(22) Date of filing: 19.04.2023
(51) Int. Cl.: H04L 9/40

(54) **SYSTEM AND METHOD FOR CLASSIFYING OBFUSCATED TRAFFIC FLOWS**

(30) Priority: 25.04.2022 IN 202211024276
(71) Applicant: Sandvine Corporation, Waterloo, Ontario N2L 3V3 (CA)
(72) Inventor: PALANISAMY, Anuram, 641109 Thondamuthur, Coimbatore (IN)
(74) Representative: Ipey

(57) **Abstract**

A method and system for classifying obfuscated traffic flows in a computer network. The method including: receiving at least one packet from an obfuscated traffic flow; determining a pattern in a header of the at least one packet that relates to a layer obfuscation of a payload of the traffic flow; removing the layer obfuscation of a payload of the at least one packet; and classifying the obfuscated traffic flow. The system includes: a packet processing engine configured to receive at least one packet from an obfuscated traffic flow; an analysis module configured to determine a pattern in a header of the at least one packet that relates to an obfuscation of a payload of the traffic flow; an obfuscation module configured to remove the obfuscation of the payload; and a classification module configured to classify the obfuscated traffic flow.

## Description

### FIELD

The present disclosure relates generally to handling of computer network traffic. More particularly, the present disclosure relates to a system and method for classifying obfuscated network traffic flows.

### BACKGROUND

Encryption of network traffic continues to increase, making it more difficult to determine the type of network traffic within an operator's network. With encryption, identifying an application or type of traffic can be a challenge. Identifying as much traffic as possible (i.e. classifying to a category of traffic or an application) can be important for taking any action or decision on the network traffic and also in determining that traffic is being charged at an appropriate rate to the subscriber. For example, traffic identification may be needed when various applications are being charged at different rates, allowed to flow at different bandwidth levels, or the like, which may cause network users to attempt to masquerade one category of traffic as another.

If traffic cannot be properly classified, the network operator may be losing out on revenue, misapplying resources or the like and also may not be able to make network upgrade decisions based on reliable data. As more and more information within the traffic flow becomes encrypted, it becomes more difficult to classify traffic. As an example, it is no longer feasible to relying on data that was previously unencrypted, for example Domain Name Server data, because this type of data is now commonly encrypted or otherwise hidden. Overall, encrypted or otherwise hidden data/traffic is sometimes referred to as "obfuscated".

As such, there is a need for an improved system and method for classifying obfuscated traffic in a computer network.

The above information is presented only to assist with an understanding of the present disclosure. No determination has been made, and no assertion is made, as to whether any of the above might be applicable as prior art with regard to the present disclosure.

### SUMMARY

In a first aspect, a method for classifying obfuscated traffic flows in a computer network, the method including: receiving at least one packet from an obfuscated traffic flow; determining a pattern in a header of the at least one packet that relates to a layer obfuscation of a payload of the traffic flow; removing the layer obfuscation of a payload of the at least one packet; and classifying the obfuscated traffic flow.

In some cases, the method further includes: re-evaluating the packet to determine whether there is any further layer of obfuscation; and removing any further layer of obfuscation until the payload of the packet is no longer obfuscated.

In some cases, re-evaluating the packet may include determining whether the payload comprises clear text.

In some cases, the obfuscation may be a XOR byte by byte or constant number obfuscation.

In some cases, determining a pattern in the header may include determining a key in the header to be used to remove the layer of obfuscation.

In some cases, the method may include applying traffic policies to the obfuscated traffic flow based on the classification of the traffic flow.

In some cases, removing the layer of obfuscation may include removing any padding between sections of the packet to determine the full payload.

In some cases, the traffic flow may be an Internet Engineering Task Force (IETF) QUIC traffic flow.

In some cases, determining a pattern in the header may include comparing the header to known obfuscation signatures.

In another aspect, there is provided a system for classifying obfuscated traffic flows in a computer network, the system includes: a packet processing engine configured to receive at least one packet from an obfuscated traffic flow; an analysis module configured to determine a pattern in a header of the at least one packet that relates to an obfuscation of a payload of the traffic flow; an obfuscation module configured to remove the obfuscation of the payload; and a classification module configured to classify the obfuscated traffic flow.

In some cases, the analysis module may be further configured to re-evaluate the packet to determine whether there is any further layer of obfuscation; and the obfuscation module is configured to remove any further layer of obfuscation until the payload of the packet is no longer obfuscated.

In some cases, the analysis module may be configured to determine whether the payload comprises clear text when re-evaluating the packet.

In some cases, the obfuscation module may be configured to determine if the obfuscation is a XOR byte by byte or constant number obfuscation.

In some cases, the analysis module may be configured to determine a key in the header to be used to remove the layer of obfuscation.

In some cases, the classification module may be configured to apply traffic policies to the obfuscated traffic flow based on the classification of the traffic flow.

In some cases, the obfuscation module may be configured to remove any padding between sections of the packet to determine the full payload.

In some cases, the traffic flow may be an Internet Engineering Task Force (IETF) QUIC traffic flow.

In some cases, the analysis module may be configured to compare the pattern of the header to known obfuscation signatures.

Other aspects and features of the present disclosure will become apparent to those ordinarily skilled in the art upon review of the following description of specific embodiments in conjunction with the accompanying figures.

### BRIEF DESCRIPTION OF FIGURES

Embodiments of the present disclosure will now be described, by way of example only, with reference to the attached Figures.
Fig. 1 illustrates an environment for computer network traffic over an operator network;
Fig. 2A illustrates an example data grab of an obfuscated traffic flow;
Fig. 2B illustrates an example data grab after the obfuscation has been removed;
Fig. 3 is a sequence diagram of an example scenario of classifying obfuscated traffic flows with unencrypted DNS data;
Fig. 4 illustrates an example embodiment of a system for classifying obfuscated traffic according to an embodiment;
Fig. 5 illustrates an embodiment of a method for classifying obfuscated traffic;
Fig. 6 illustrates a method for removing obfuscation according to an embodiment; and
Fig. 7 is a sequence diagram of classifying obfuscated traffic flow with encrypted DNS data.

### DETAILED DESCRIPTION

Generally, the present disclosure provides a method and system for classifying obfuscated traffic. The system is configured to receive a traffic flow and determine whether the DNS or other aspects used for classification are encrypted. The system is further configured to determine whether the payload of the packet is obfuscated and determine a header pattern that may provide detail as to the type of obfuscation used. The system is further configured to remove the obfuscation of the payload and determine if there are further layers that also are required to be removed prior to determining the payload of the packet. Once the payload is clear, the traffic flow may be classified via various known classification techniques. Once classified, the traffic flow may have the appropriate policies applied based on the classification.

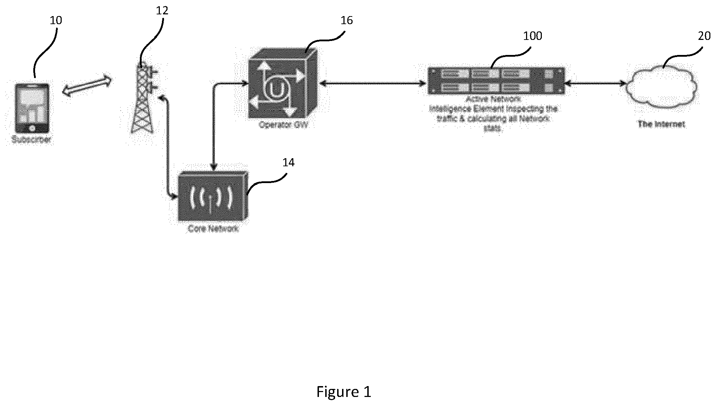

Figure 1 illustrates an environment for an embodiment of the system for classifying obfuscated traffic 100. A subscriber, using a user device 10, may initiate a traffic flow with a base station 12. The traffic flow may be transmitted to and from a core network 14 from the base station. The traffic flow may be seen and directed by the operator network 16 and may be reviewed and classified by the system 100 for classifying obfuscated traffic. The system 100 may be included as a component of a network device which reside between the operator's gateway and the Internet 20. The system 100 is intended to reside within the operator's or Internet Service Provider's (ISP's) network 16. It will be understood that embodiments of the system and method detailed herein are intended to be employed over any type of computer network, for example, fixed line, mobile, satellite or other network.

Many applications use simple obfuscation, such as encrypting or obscuring the payload and sending a key with the payload. Generally, traffic classification happens based on clear text information available in the payload, a repeated pattern seen on every packet sequence seen from the application, or in other similar manners. When this traffic is obfuscated with some simple or complex obfuscation techniques, for example, XOR byte by byte with a constant number or the like, it is not possible to classify the traffic without knowing and removing the obfuscation.

There are cases where at least a part of the payload is encrypted, and a key may be required to decrypt the payload. In some cases, this key may be present in the same payload. In these cases, it may not be possible to classify the traffic without decrypting the payload. The system is configured to use the key available in the payload and decrypt the payload to see clear text and/or a byte pattern and may be used for classifying the traffic.

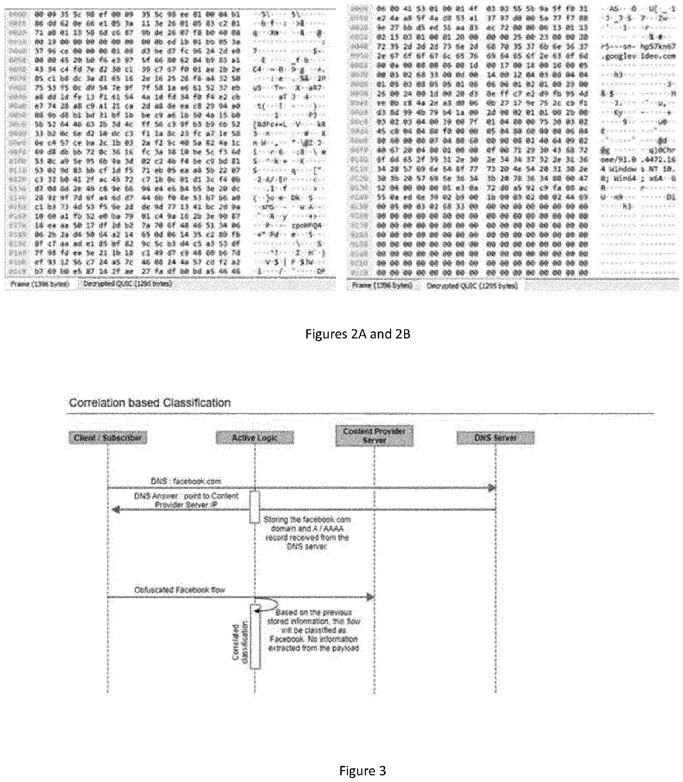

Figures 2A and 2B illustrate data as seen in the wire. Figure 2A illustrates the data that can be seen as obfuscated data. Figure 2B illustrates the data after removing the obfuscation. The data may be decrypted by the key that is included in the payload. The data now includes some clear text that will allow the traffic flow to be classified and allow appropriate policies to be applied to the traffic flow. It can be seen from figures 2A and 2B that the traffic flow may not be able to be classified or use the traffic to expose the payload level information without removing the obfuscation.

Without the capability to remove obfuscation, flows may be left unclassified, or no details may be extracted from the payload. Generally, traffic flow classification has been limited to classifying the traffic flow using a previous flow which was not obfuscated.

Figure 3 provides for a conventional solution for classifying obfuscated traffic flow. Generally, these traffic flows are conventionally classified based on a control flow coming from the same subscriber. Figure 3 illustrates when a DNS flow carrying a known domain name going to a DNS server or a response coming from the DNS server, the payload is processed. A DNS response with known domain name is processed to read the A / AAAA records and store for future use. If a data flow which is obfuscated (in that it includes no clear text pattern) is seen by the network device, the server IP of the flow is looked up in the stored DNS cache. If there is a matching entry in the DNS cache for the server Internet Protocol (IP) address, the traffic flow is classified based on the domain name. This classification is based on the information seen in the DNS flow. However, no information is extracted from the actual data flow. As such, it will be understood that this traditional method is unlikely to be successful if the DNS information is encrypted or otherwise hidden.

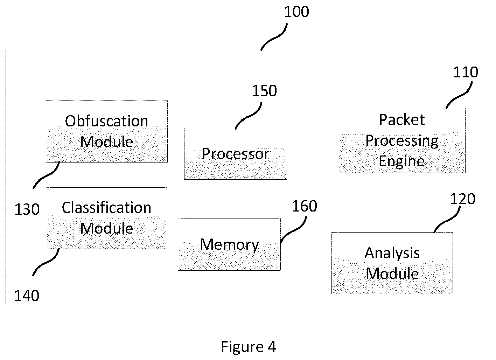

Figure 4 illustrates an embodiment of a system for classifying obfuscated traffic flows 100. The system includes a packet processing engine 110, an analysis module 120, an obfuscation module 130, a classification module 140, at least one processor 150, and a memory component 160. The system is generally intended to be distributed and reside in at least one network device on the data plane. The processor may be configured to execute the instructions stored in the memory component in order for the modules to execute their functions. The system 100 is intended to receive information from the computer network equipment that allows the system to determine traffic flow statistics and provide for traffic action instructions and traffic management rules for the network.

The packet processing engine 110 is configured to receive a packet from a traffic flow. The packet processing engine may include a signature engine configured to determine whether the packet includes an obfuscated or encrypted payload. The packet processing engine 110 may be further configured to determine whether the DNS data or other data is encrypted in the traffic flow. If it is determined that the packet does not include obfuscated payload data and the DNS is not encrypted, the packet may be classified by the classification module.

The analysis module 120 may be configured to detect patterns in the header in order to determine the type or level of obfuscation used. Various signatures and patterns used are detailed herein. The analysis module 120 may re-evaluate the header after a layer of obfuscation is removed by the obfuscation module to determine whether any further layers of obfuscation remain.

The obfuscation module 130 is configured to remove a layer of obfuscation after a pattern is detected by the analysis module 120. In some cases, the obfuscation module 130 may be configured to determine a key that may be included in and associated with any encryption of the payload.

The classification module 140 is configured to classify the traffic once the obfuscation has been removed from the traffic flow or may classify any obfuscated traffic flow via, for example, conventional traffic classification techniques. In some cases, the classification module 140 may further ensure that any appropriate policy is applied to the traffic flow based on the classification of the traffic.

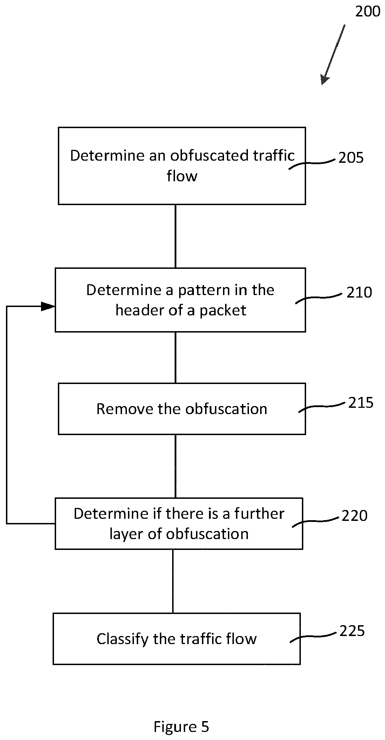

Figure 5 illustrates a high-level flow chart of a method 200 for classifying obfuscated traffic flows according to an embodiment. The packet processing module 110 may identify a new traffic flow and may determine whether the traffic flow includes an obfuscated payload, at 205. At 210, the analysis module is configured to determine a pattern in the header that provides insight into the type of obfuscation or encryption used in the packet and traffic flow. At 215, the obfuscation module 130 is configured to remove the layer of obfuscation. The analysis module may then determine whether there is a further layer of obfuscation that is required to be analyzed removed, at 220. If there is another layer, a further pattern is intended to be determined and the further layer of obfuscation is intended to be removed. If the system has removed each layer of obfuscation such that the payload may now be reviewed, the classification module is configured to classify the packet, at 225.

Various types of obfuscation may be used in traffic flows. The analysis module may include a signature engine to identify the type of known obfuscation seen in the payload based on the initial few bytes of the flow. The signature engine is intended to identify a pattern of obfuscation one level at a time. Once a first level of obfuscation is identified, an appropriate function or subroutine may be used by the obfuscation module to remove the payload obfuscation. In some cases, a specific type of obfuscation may be more common for a specific type of traffic. For example, VoIP applications which are trying to overcome operators and/or government restrictions tend to use a particular type of obfuscation.

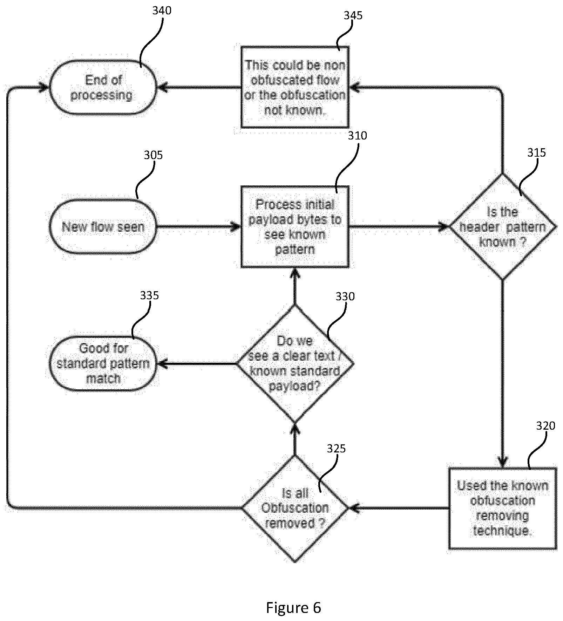

Figure 6 illustrates a method for determining and removing obfuscation of a received traffic flow according to an embodiment. At 305, the new traffic flow is received by the packet processing engine. At 310, the flow is processed by the analysis module to determine if there is a known signature that indicates the payload has been obfuscated. At 320, the analysis module determines a known signature pattern.

Some of the more common signatures that may be removed are as follows:
- For Encrypted Packets: the analysis module may review the header to determine if there is a key and/or nuance in the standard header. The key may then be used to decrypt the payload and the packet may be reviewed to determine if the decryption was successful.
- For packets with padding (inserted zeros between sections): the analysis module may review the packet to determine if the full payload can be used with the received payload. If there is any padding bytes seen, the header may be checked to see if it is of the check for next header, if it is of the same type as the previous packet. The packets may be reassembled to a new payload for parsing. This action may be repeated until the end of the received payload.
- For packets that are XOR with specific bytes: the traffic flow may be checked for XOR with different number (which may occur during signature development or may be dynamic). Once the HEX values have been determined that were used for the XOR, the obfuscation module may use this known key to remove the obfuscation.

Other signatures may be used and may be determined by the analysis modules. In some cases, new signatures may become more common, and these signatures may be sent to or added into the analysis module's repertoire to determine obfuscation techniques. New signatures may be determined when, for example, an application wants to remain hidden or evade government regulation, or the like,

At 320, the obfuscation module may remove the discovered obfuscation via an appropriate method. At 325, the payload is reviewed to determine if all the obfuscation layers are removed. It may be determined that all the layers of obfuscation are removed, by whether there is clear text that can be reviewed in the payload, at 330. At 335, the text and payload may be reviewed, and the traffic flow may be classified by the classification module.

Once a first level obfuscation is removed the analysis module is intended to determine whether there is another layer of obfuscation or if all the layers have been removed. The analysis module may again check if the processed payload carries a meaning for fields (as per standard or known format). If all the layers have been removed and there is no clear text or standard payload patterns the method may end without being able to review and classify the traffic flow, at 340. If there are further layers of obfuscation for the traffic flow, the method may continue to review pattern heading to remove the next layer of obfuscation.

It is intended that this process is repeated until the analysis module recognizes clear text as per the standard or known meaningful field formats. The order in which the obfuscation is removed could be part of the signature based on known header format or it may be dynamic. In some cases, there may remain layers of obfuscation that are new and or unrecognizable to the system, at 345. In these cases, the system may not be able to properly process and classify these traffic flows, at 340. Once one layer of obfuscation is removed, the resulting payload may carry a header, an un-obfuscated payload or may remain obfuscated.

Embodiments of the system and method are intended to classify obfuscated traffic flows, including traffic flows having a plurality of layers of obfuscation and/or encrypted DNS data. When an obfuscated traffic is received by a packet processing engine, for example, a DPI engine, the system is configured to determine the type of obfuscation and remove or resolve the obfuscation.

It is intended that the analysis module may identify the type of obfuscation based on the first few bytes in the actual payload. Based on a first level obfuscation identified, appropriate obfuscation removing functions may be used to remove the first level. Once the first level of obfuscation is removed, the final payload is checked for any further levels of obfuscation. If any further levels of obfuscation are found, they are intended to be analyzed by the analysis module and removed by the obfuscation module to get the final processed payload which can be reviewed and classified, by for example, a regular byte parser.

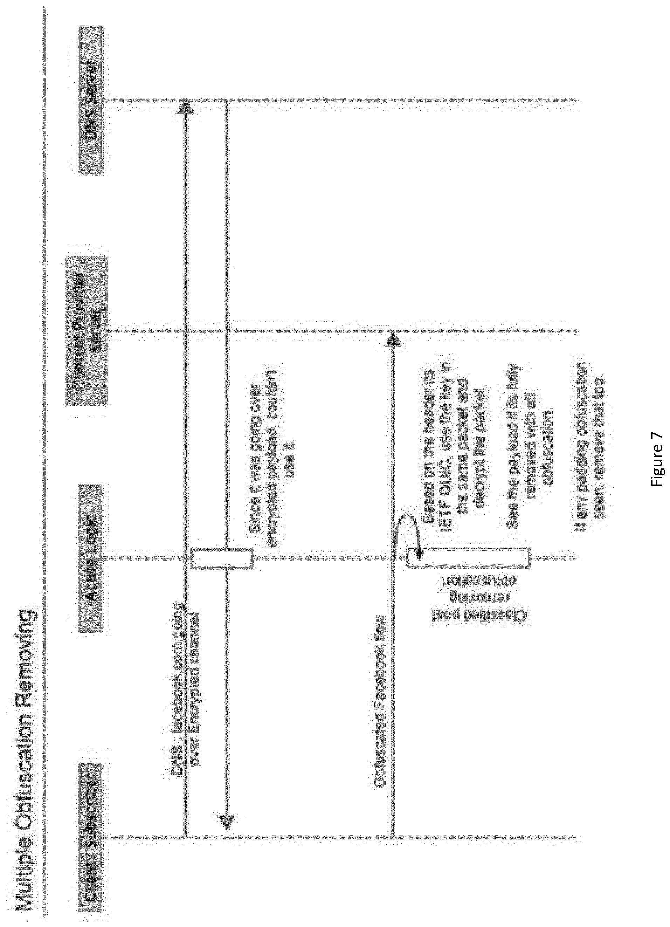

Figure 7 illustrates a sequence diagram of removing a plurality of layers of obfuscation from a traffic flow. The initial request includes encrypted DNS data as it is sent over an encrypted channel. As such, the system is unable to classify the traffic flow based on the DNS data. Once the traffic flow commences, the system is configured to review the payload to determine whether there is obfuscated data that may be removed in order for the payload to be reviewed and classified.

Embodiments of the system and method are intended to provide a clear text as seen by the client or server, which may be used for classification or any further data extraction process. It will be understood that with, for example, the DNS data being encrypted, or the methods of obfuscation being hidden from the midpoints of the traffic flow, providing clear text may be difficult. As such, the system and method are intended to remove a plurality of obfuscation layers in order to determine the payload within the traffic flow.

As there have been increasing cyber-attacks, payload appears to be getting more obfuscated. As such, for meaningful classification of traffic flows, it is becoming increasingly important to remove the obfuscation.

As standards like Internet Engineering Task Force (IETF) QUIC are capable of adding more than one level of obfuscation to the payload, each layer of obfuscation needs to be removed prior to classification of the traffic flow. Without classification, further traffic flow actions may not be taken in the network, and, as such, the traffic flow may be improperly prioritized, billed or the like. For analytics, enforcement and other traffic actions, traffic classification remains an important function, which is intended to be provided by the system and method detailed herein.

A specific example is provided. The packet processing engine receives a traffic flow and identifies the presence of obfuscation. In particular, the packet processing engine may use the initial few bytes to identify potential obfuscation used in the rest of the payload. Once potential obfuscation is identified, the analysis module may review the traffic flow. The analysis module may detect the obfuscation, based on, for example, a pre-configured list of known obfuscation patterns or a dynamic list of obfuscation pattern check. In a specific example, the header may include formats such as: IETF QUIC, which, based on the first few bytes the analysis module may identify the IETF QUIC version the payload is following. The analysis module may cross check this data with further fields in the long header.

In other cases, the analysis module may identify IETF QUIC Padding. In particular, a Client Hello payload may have been fragmented into a plurality of parts and padding headers may be inserted in-between each of the part of the Client Hello fragments.

In still other cases, the analysis module may identify simple obfuscation like XOR with specific Bytes. In this case, the system may be configured to check with a known XOR byte pattern and determine if there is a resulting clear text known headers, for example, GET, REGISTER or the like.

It will be understood that the above are examples of possible obfuscation techniques, and the list of obfuscation could be anything that hides the clear text or known standard and/or non-standard payload into obfuscated bytes.

After the type of obfuscation is determined, the obfuscation module is configured to provide a function to remove the obfuscation. If the payload is detected as IETF QUIC, the Key/Nuance may be used in combination with the appropriate removal technique for the respective QUIC version. Once the payload is successfully decrypted, the\y system may have a clear payload for parsing and classifying. If the received payload carries any further obfuscation layers, for example, padding, the system is configured to provide multi-layer obfuscation removal

Embodiment of the system and method are further configured to review the traffic flow to determine if there are a plurality of layers of obfuscation. Generally, there may be at least one or two layers of obfuscation that may need to be removed. After each layer is removed, the review of the payload is completed to determine whether further removal is required. If so the identification of the obfuscation and the removal of the obfuscation layer is completed by the system. Once the obfuscation is removed, the final payload is passed to for classification and fields extraction, for example by a standard parser.

In the preceding description, for purposes of explanation, numerous details are set forth in order to provide a thorough understanding of the embodiments. However, it will be apparent to one skilled in the art that these specific details may not be required. In other instances, well-known structures may be shown in block diagram form in order not to obscure the understanding. For example, specific details are not provided as to whether the embodiments or elements thereof described herein are implemented as a software routine, hardware circuit, firmware, or a combination thereof.

Embodiments of the disclosure or elements thereof may be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A method for classifying obfuscated traffic flows in a computer network, the method comprising:
receiving at least one packet from an obfuscated traffic flow;
determining a pattern in a header of the at least one packet that relates to a layer obfuscation of a payload of the traffic flow;
removing the layer obfuscation of a payload of the at least one packet; and
classifying the obfuscated traffic flow.

2. The method of claim 1 further comprising:
re-evaluating the packet to determine whether there is any further layer of obfuscation; and
removing any further layer of obfuscation until the payload of the packet is no longer obfuscated.

3. The method of claim 2 wherein re-evaluating the packet comprises determining whether the payload comprises at least some clear text.

4. The method of claim 1 wherein the obfuscation is one of an XOR byte by byte or constant number obfuscation.

5. The method of claim 1 wherein determining a pattern in the header comprises determining a key in the header to be used to remove the layer of obfuscation.

6. The method of claim 1 further comprising applying traffic policies to the obfuscated traffic flow based on the classification of the traffic flow.

7. The method of claim 1 wherein removing the layer of obfuscation comprises removing any padding between sections of the packet to determine the full payload.

8. The method of claim 1 wherein the traffic flow is an Internet Engineering Task Force (IETF) QUIC traffic flow.

9. The method of claim 1 wherein determining a pattern in the header comprises comparing the header to known obfuscation signatures.

10. A system for classifying obfuscated traffic flows in a computer network, the system comprising:
a packet processing engine configured to receive at least one packet from an obfuscated traffic flow;
an analysis module configured to determine a pattern in a header of the at least one packet that relates to an obfuscation of a payload of the traffic flow;
an obfuscation module configured to remove the obfuscation of the payload; and
a classification module configured to classify the obfuscated traffic flow.

11. The system of claim 10 wherein the analysis module is further configured to:
re-evaluate the packet to determine whether there is any further layer of obfuscation; and
the obfuscation module is configured to remove any further layer of obfuscation until the payload of the packet is no longer obfuscated.

12. The system of claim 10 wherein the obfuscation module is configured to determine if the obfuscation is one of an XOR byte by byte or constant number obfuscation.

13. The system of claim 10 wherein the analysis module is configured to determine a key in the header to be used to remove the layer of obfuscation.

14. The system of claim 10 wherein the classification module is configured to apply traffic policies to the obfuscated traffic flow based on the classification of the traffic flow.

15. The system of claim 10 wherein the analysis module is configured to compare the pattern in the header to known obfuscation signatures.
